# EUROPÄISCHE PATENTSCHRIFT

(11) **EP 0 863 962 B1**
(45) Veröffentlichungstag und Bekanntmachung des Hinweises auf die Patenterteilung: **08.03.2000**
(21) Anmeldenummer: 96946025.2
(22) Anmeldetag: 29.11.1996
(51) Int. Cl.: C09K 21/02, C09K 21/06, E04B 1/94

(54) **WÄRMEDÄMMENDES BESCHICHTUNGSMATERIAL**
HEAT-INSULATING COATING MATERIAL
MATERIAU DE REVETEMENT THERMO-ISOLANT

(30) Priorität: 30.11.1995 DE 19546226
(43) Veröffentlichungstag der Anmeldung: 16.09.1998
(73) Patentinhaber: Christ, Wolfgang, 13439 Berlin (DE)
(72) Erfinder: Christ, Wolfgang, 13439 Berlin (DE)
(74) Vertreter: Pfenning, Meinig & Partner
(86) Internationale Anmeldenummer: DE9602295
(87) Internationale Veröffentlichungsnummer: WO9721784

(56) Entgegenhaltungen:
- EP-A- 0 563 536
- DE-A- 3 424 818
- US-A- 5 035 951
- DATABASE WPI Week 8023 Derwent Publications Ltd., London, GB; AN 80-40528c XP002031311 & JP 55 055 856 A (GIJUTSU) , 24.April 1980
- DATABASE WPI Week 8204 Derwent Publications Ltd., London, GB; AN 82-06572e XP002031312 & JP 56 160 382 A (SHINAGAWA) , 10.Dezember 1981

## Beschreibung

Die Erfindung betrifft ein wärmedämmendes Beschichtungsmaterial, das insbesondere auf metallische tragende Elemente von Gebäuden aufgebracht werden kann sowie ein Verfahren zu dessen Herstellung und die entsprechende Verwendung des erfindungsgemäßen Beschichtungsmaterials.

Für die brandschutztechnische Beschichtung von Stahlträgern im Stahlhochbau wurde bis vor einigen Jahren schwach gebundener Asbest (sogenannter Spritzasbest) eingesetzt, da in der Vergangenheit der Gesundheitsgefährdung durch Mineralfasern noch nicht allzuviel Beachtung geschenkt worden ist.

Dieses hat sich nunmehr grundlegend geändert und es wurden entsprechende Anwendungsverordnungen und Arbeitsvorschriften, wie unter anderem die ständig weiter entwickelte TRGS 519 in Deutschland herausgegeben, bei der die Verwendung von Mineralfasern im Bauwesen geregelt wird. In den meisten europäischen Staaten ist die Verwendung von asbesthaltigen Baustoffen daher auch zwischenzeitlich strikt verboten worden.

Zum gegenwärtigen Zeitpunkt gibt es jedoch noch eine große Anzahl von Gebäuden, in welchen asbesthaltige Baustoffe in der Vergangenheit zum Einsatz gekommen sind. Vielfach handelt es sich dabei auch um öffentliche Gebäude, in denen im Zeitraum von 1965 bis 1980 ca. 2,5 Millionen Tonnen asbesthaltige Baustoffe verbaut worden sind. Zwei Drittel dieser Baustoffe sind zur Wärmeisolierung verwandt worden und ein Drittel ist als direkte Brandschutzbeschichtung in Form von schwach gebundenem Asbest (Spritzasbest), daß in die höchste Gefährdungsstufe eingeordnet worden ist, aufgebracht worden. Es ist davon auszugehen, daß in der Bundesrepublik Deutschland zur Zeit 800 000 Tonnen Spritzasbest noch in Gebäuden vorhanden sind. Bei der Sanierung solcher Gebäude treten große Probleme auf und es müssen große Anstrengungen unternommen werden, um bei diesen Arbeiten eine Gesundheitsgefährdung auszuschließen.

Außerdem ist es bisher noch nicht gelungen, einen zumindest ähnlich wirksamen Ersatz für diesen sogenannten Spritzasbest als Brandschutzverkleidung, insbesondere für tragende Elemente aus den verschiedensten Metallen, der auf einfache Art und Weise im Bauwesen eingesetzt werden kann, zu entwickeln.

Als Alternativen zum Einsatz von Spritzasbest als Brandschutzverkleidung für Stahlstützen im Stahlhochbau sind derzeit zwei Verfahren geläufig:

### Verfahren I

### Verkleidung der Stahlstützen durch aufmontierte Platten

Dieses Verfahren gestaltet sich durch den notwendigen Rostschutzanstrich der Stahlstützen, die Anfertigung und Anbringung der Plattenhalterungen und das aufwendige Anbringen der Verkleidungsplatten als sehr kostenintensiv.

### Verfahren II

### Verwendung von Rohren als Stahlstützen

Bei diesem Verfahren werden die als Stahlstützen dienenden Rohre durch den Einsatz von Bewehrungsstahl mit Beton verfüllt, was aufgrund des verhältnismäßig teuren Materialeinsatzes und der notwendig zu leistenden Mehrarbeit sehr kostenintensiv ist.

Bei bereits stehenden Gebäuden ist das Vorsehen einer nachträglichen Brandschutzverkleidung nach den Verfahren I und II nicht ohne weiteres möglich und dabei sind nicht nur die Kosten zu beachten, sondern es treten auch technische Aspekte auf, da die entsprechenden Verfahren nicht in jedem Fall ohne weiteres anzuwenden sind.

Mit den gesetzlichen Regelungen, wie sie auch der TRGS 519 zu entnehmen sind, wurden und werden die Erfordernisse an den Gesundheitsschutz weiter verschärft und dies führt insbesondere dazu, daß Asbestsanierungsarbeiten mit weiteren Kostensteigerungen verbunden sind. Die Erfordernisse bei der Entfernung und Entsorgung von asbesthaltigen Stoffen, zu denen der Spritzasbest zweifelsfrei gehört, erscheint daher zwar kostengünstiger, die Aufwendungen für die Entfernung und die Entsorgung der Asbest enthaltenden Beschichtungs- und Baustoffe wird aber auch immer problematischer und die dadurch hervorgerufenen Kosten steigen selbstverständlich ebenfalls entsprechend.

Es ist daher Aufgabe der Erfindung, ein wärmedämmendes Beschichtungsmaterial zur Verfügung zu stellen, das ökologisch unbedenklich und dessen wärmedämmenden Eigenschaften zumindest annähernd denen von Spritzasbest entsprechen und das einfach und ökonomisch herstellbar und anwendbar ist.

Erfindungsgemäß wird diese Aufgabe durch die Merkmale des Patentanspruches 1 für das Beschichtungsmaterial und die Merkmale des Patentanspruches 11 für das Verfahren zur Herstellung des Beschichtungsmaterials gelöst.

Vorteilhafte Ausgestaltungsformen und Weiterbildungen der Erfindung ergeben sich bei Anwendung der in den untergeordneten Ansprüchen enthaltenen Merkmale.

Das erfindungsgemäße wärmedämmende Beschichtungsmaterial, das bevorzugt für tragende Elemente von Gebäuden eingesetzt werden kann, besteht dabei aus mindestens 40 Gew.-% Zellulose, die in bevorzugter Form Altpapier mit einem Anteil von 45 bis 55 Gew.% sein kann, das in besonders bevorzugter Form aus glanzpapierfreiem Altpapier besteht. Es können aber auch alle anderen Zellulosematerialien, wie z.B. Abfälle aus der Holzindustrie eingesetzt werden. Dabei wirkt sich aber der Kostenaspekt beim Einsatz von Altpapier auf die Gesamtkosten positiv aus.

Neben der Zellulose enthält das Beschichtungsmaterial weiter Borax und Sassolin mit einem Anteil von maximal 25 Gew.-%, Graphit mit mindestens 5 Gew.-%, ein elastomeres Bindemittel mit mindestens 15 Gew.-% und Borsilikat.

Ein bevorzugt einzusetzendes Bindemittel ist dabei ein Acryl-Latex, dessen Anteil im Beschichtungsmaterial vorteilhaft bei 15 bis 30 Gew.-% gehalten werden soll.

Das Borsilikat sollte bevorzugt kugelförmig sein und einen Durchmesser zwischen 0,01 und 0,02 mm aufweisen.

Außerdem können im Beschichtungsmaterial noch Pigmente mit einem Anteil von 5 bis 10 Gew.-% und Keramikpulver mit einem Anteil zwischen 5 und 10 Gew.-% enthalten sein. Weitere zugebbare Additive sollten nichttoxisch sein. Zu diesen Additiven gehören .... . Der Anteil dieser Additive sollte aber 5 Gew.-% nicht überschreiten.

Zur letztendlichen Verarbeitung kann der Mischung mit den oben genannten Komponenten ein geeignetes Lösungsmittel, dessen Anteil zwischen 5 und 15 Gew.% liegt, zugegeben werden, um das Beschichtungsmaterial im spritzfähigen Zustand zur letztendlichen Applikation zur Verfügung stellen zu können. Neben anderen geeigneten Lösungsmitteln bietet sich Wasser, wegen seiner ökologischen und physiologischen Unbedenklichkeit als besonders geeignet an. Es können aber auch andere Lösungsmittel, die auch organischer Natur sein können, eingesetzt werden.

In bevorzugter Form weist das erfindungsgemäße wärmedämmende Beschichtungsmaterial die nachfolgend genannten Bestandteile auf:

Zellulosepulver mit einem Anteil von 48 bis 52 Gew.-%, Borax und Sassolin mit einem Anteil von 8 bis 12 Gew.-%, Graphit mit einem Anteil von 5 bis 15 Gew.-%, Bindemittel mit einem Anteil von 20 bis 25 Gew.-%, Borsilikat mit einem Anteil von 1 bis 5 Gew.-% und Pigmente mit einem Anteil von 5 bis 10 Gew.-%.

Zusätzlich könne nichttoxische Additive zugegeben werden, die sich positiv auf das Alterungsverhalten, die Korrosionseingenschaften und anderes mehr auswirken. Durch die bereits genannte Zugabe von Keramikpulver kann die Wärmedämmung des erfindungsgemäßen Beschichtungsmaterials weiter erhöht und der Temperaturübergang entsprechend von der Oberfläche auf das zu beschichtende Material entsprechend verlangsamt werden.

Das erfindungsgemäße Beschichtungsmaterial weist von Hause aus schon gute Korrosionsschutzeigenschaften auf und kann mit den verschiedensten Verfahren auf das zu beschichtende Material aufgebracht werden. Diese Verfahren können ein einfacher Auftrag von Hand, die Verwendung eines Airless-Sprühgerätes oder ein Aufschäumen sein. Dabei wird in jedem Fall eine gute Haftung auf der Oberfläche des zu beschichtenden Materials erreicht.

Die unter Verwendung des erfindungsgemäßen Beschichtungsmaterials hergestellte Schicht sollte eine Schichtstärke von bis zu 7 cm erreichen, wobei bereits 5 cm Schichtdicke eine ausgezeichnete Wärmedämmung realisieren. Die Mischung des erfindungsgemäßen Beschichtungsmaterials sollte so eingestellt werden, daß die Wärmedämmwirkung nur eine Wärmeübertragung durch die erzeugte Schicht von mindestens 900 °C je Minute/cm Schichtdicke erreicht wird. Es können jedoch ohne weiteres auch 1000 °C/cm Schichtstärke und Minute erreicht werden.

Bei Versuchen mit einem Schweißbrenner wurde auf der Oberfläche einer mit dem erfindungsgemäßen Beschichtungsmaterial erzeugten Schicht eine Temperatur von 2400 °C erreicht. Das nachfolgend wiedergegebene Meßprotokoll gibt dabei den Temperaturabfall bei verschiedenen Schichtdicken einer aus erfindungsgemäßem Beschichtungsmaterial hergestellten Schicht wieder. Dabei wurden die Temperaturen mit dem Schweißbrenner in verschiedenen Zeitstufen gemessen. Der jeweilige Probekörper, mit der jeweils angegebenen Schichtstärke, befand sich vor den Versuchen jeweils 24 h in einem Laborraum bei Raumtemperatur von 23 °C.

| **Meßprotokoll** | | | | | | |
|---|---|---|---|---|---|---|
| cm | 0 | 1 | 2 | 3 | 4 | 5 |
| min | | | | | | |
| 1 | 2400° | 1400° | 600° | 100° | 60° | 28° |
| 2,5 | 2400° | 1500° | 720° | 115° | 65° | 28.7 |
| 5 | 2400° | 1550° | 780° | 130° | 75° | 29° |
| 10 | 2400° | 1600° | 800° | 132,5° | 75,2° | 29° |
| 20 | 2400° | 1800° | 900° | 138° | 76° | 29,1° |
| 30 | 2400° | 1850° | 910° | 139° | 76,4 | 29,2° |
| 40 | 2400° | 1880° | 915° | 139.5° | 76,4° | 79,2° |

Das erfindungsgemäße wärmedämmende Beschichtungsmaterial kann in mehreren Schritten, auf einfache Weise und kostengünstig hergestellt werden.

Dabei wird vorzerkleinerte Zellulose in eine Graphit enthaltende Suspension gegeben, vermischt und die Mischung am Anschluß daran getrocknet.

Die vorzerkleinerte Zellulose, die, wie bereits erwähnt, vorteilhaft Altpapier sein kann, sollte dann nach der Vorzerkleinerung eine Körnung zwischen 3 und 4 mm aufweisen.

Die so erhaltene trockene Mischung wird dann weiter gemahlen, bis die Zellulose eine Körnung von 0,01 bis 0,03 mm aufweist. Im Anschluß daran werden dann Borax und Sassolin in kristalliner Form zugeführt und parallel dazu, eine aus dem Bindemittel und einem Lösungsmittel gebildete Emulsion mit Borsilikat vermischt.

Dabei kann vorteilhaft ein latexartiges Elastomer, wie z.B. Acryl-Latex als Bindemittel eingesetzt werden, das gleichmäßig bis zu 100 %-iger Einbindung der Wasseranteile angemischt wird. Dabei wird Wasser als Lösungsmittel für das Bindemittel eingesetzt. In diese Emulsion wird dann Borsilikat, vorteilhaft in Form von vakuumierten Borsilikatkugeln und gegebenenfalls die Pigmente gegeben. In einem letzten Verfahrensschritt werden dann beide so erhaltenen Mischungen weiter vermischt und mit Lösungsmittel eine zur Verarbeitung geeignete Konsistenz eingestellt. Die Konsistenz kann dabei von leicht pastös bis zu einer spritzfähigen Konsistenz reichen, je nachdem in welcher Form die letztendliche Applikation erfolgen soll.

Bei der Erfindung ist es besonders wesentlich, daß die in der Suspension enthaltenen Graphitpartikel auf dem Zelluloseausgangsmaterial eine Graphitstruktur ausbilden und so die besonders günstigen und vorteilhaften Eigenschaften des Beschichtungsmaterials erreicht werden können.

Die Borsilikatkugeln dienen einmal als Verstärkungsmaterial und zum anderen zur Erhöhung der Temperaturbeständigkeit, wie dies auch mit der Zugabe des Keramikpulvers der Fall ist.

Vorteilhaft kann das Verfahren zur Herstellung des erfindungsgemäßen Beschichtungsmaterials dadurch verbessert werden, daß nach der Zugabe von Borax, unter gleichzeitiger Zugabe von Borwasser und weiterer Mischung der einzelnen Komponenten, die Mischung unter gleichzeitigem ständigen Rühren, bei relativ geringer kinetischer Energie, wie dies bei einem Mischwerk mit einer Drehzahl zwischen 35 und 55 U/min der Fall ist, Borwasser (stark verdünnte Borsäure) eingespritzt wird und das Ganze gleichzeitig in einem Temperaturbereich zwischen 100 und 150 °C, bevorzugt zwischen 110 bis 135 °C erwärmt wird, bis der Wasseranteil verdampft ist und ein trockenes Pulvergemisch ausgebildet wird.

Dieses trockene Pulvergemisch kann dann, wie bereits beschrieben, entweder nochmals fein gemahlen werden oder in die zweite Emulsion, aus Bindemittel, Lösungsmittel und Borsilikat gegeben und vermischt werden und das Ganze in einer entsprechend geeigneten Konsistenz dann letztendlich appliziert werden.

Die Mischung, wie sie im Verfahrensschritt e) definiert ist, sollte dabei ebenfalls bei relativ geringer kinetischer Energie in einem Mischwerk, bei einer Drehzahl 45 U/min über eine Zeitdauer von ca. 10 Minuten durchgeführt werden.

Mit dem erfindungsgemäßen Beschichtungsmaterial wird ein in seiner Konsistenz elastisches Material zur Verfügung gestellt, das mit Zugabe eines Lösungsmittels (z.B. Wasser) im beschränkten Maße verdünnt werden kann und so eine geeignete Verarbeitungskonsistenz einstellbar wird.

Bei Neubauten kann das erfindungsgemäße Beschichtungsmaterial direkt und vorteilhaft auf sämtliche tragenden Elemente aufgebracht werden, wobei der Auftrag besonders vorteilhaft auf metallischen tragenden Elementen, wie z.B. des Stahlrohbaues erfolgen sollte.

Eine weitere günstige Anwendung des erfindungsgemäßen Beschichtungsmaterials, ist die Sanierung von vorhandenem Spritzasbest, der mit einem Überzug aus erfindungsgemäßen Beschichtungsmaterial versehen werden kann und so eine Versiegelung mit physiologisch unbedenklichen Materialien erfolgt, was die Kosten der Asbestsanierung wesentlich verringert.

Laborversuche haben gezeigt, daß das erfindungsgemäße Beschichtungsmaterial die verschiedensten nachfolgend genannten Bestimmungen zumindest in zufriedenstellender Weise erfüllt:
- ASTM 1653 Wasserdampfdurchlässigkeit
- ASTM D 865 Veränderung bei Temperaturänderung
- ASTM D 570 Wasserabsorption
- ASTM D 746 Sprödigkeitstemperatur
- ASTM E 96 Wasserverhalten
- ASTM D 1149 Ozonbelastung
- ASTM D 412 Dehnungsverhalten
- ASTM C 177/ASTM C 1045 Wärmeleitfähigkeit
- ASTM D 1308 Reaktion auf Chemikalien
- ASTM E 108 Feuerfest
- ASTM E 903-82 Reflexion
- NEN 6065 Brandweiterleitung
- DIN 52615 Wasserdampfdurchlässigkeit

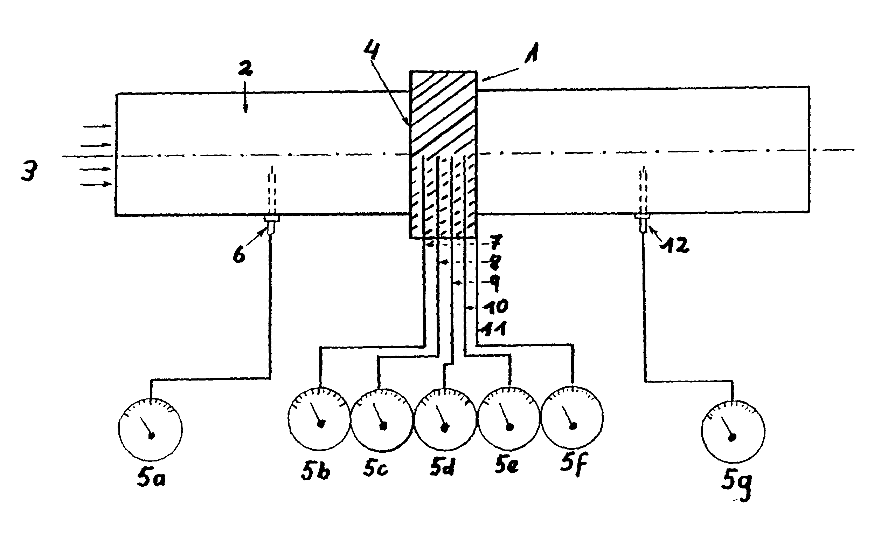

Bei dem einzigen, in der Figur 1 gezeigten Beispiel, zeigt diese schematisch einen Versuchsaufbau, bei dem eine Platte mit einer Stärke von 5 cm aus dem erfindungsgemäßen Beschichtungsmaterial in einem Strömungskanal 2 angeordnet ist. Durch den Strömungskanal 2 wird eingangsseitig ein Hitzestrom 3 mit maximaler Temperatur von 2400 °C geführt. Der Hitzestrom 3 gelangt auf die Stirnfläche 4 der Platte 1 aus dem erfindungsgemäßen Beschichtungsmaterial.

An der Platte 1 aus dem Beschichtungsmaterial sind in Strömungsrichtung des Hitzestromes 3 hintereinander in einem Abstand mehrere Meßfühler 6 bis 12 zur Messung der Temperatur im Strömungskanal 2 angeordnet, die mit jeweils einem Anzeigegerät 5a bis 5g verbunden sind. Die Meßfühler 6 bis 12 haben dabei in Strömungsrichtung des Hitzestromes 3 gesehen, jeweils einen Abstand von 1 cm und die Temperaturmessung in der Platte erfolgt dabei bei folgenden Schichtstärken: 1 cm, 2 cm, 3 cm, 4 cm und 5 cm.

Die jeweils mit den Meßfühlern gemessenen Temperaturen wurden nach 1 Minute, nach 2,5 Minuten, nach 5 Minuten, nach 10 Minuten, nach 20 Minuten, nach 30 Minuten und nach 40 Minuten für die verschiedenen Schichtdicken erfaßt und sind im bereits oben genannten Meßprotokoll enthalten.

Die Meßwerte zeigen eindeutig, die gute wärmedämmende Wirkung der erfindungsgemäß ausgebildeten Beschichtung. Auch nach 40 Minuten ist nur ein geringfügiger Temperaturanstieg auf der dem Hitzestrom 3 abgewandten Seite der Platte 1 gemessen worden.

## Patentansprüche

1. Wärmedämmendes Beschichtungsmaterial für tragende Element enthaltend:
| | |
|---|---|
| Zellulose | mindest. 40 Gew.% |
| Borax und Sassolin | Maximal 25 Gew.% |
| Graphit | mindest. 5 Gew.% |
| elastomeres Bindemittel | mindest. 15 Gew.% |
und Borsilicat.

2. Beschichtungsmaterial nach Anspruch 1, dadurch gekennzeichnet, daß das Zellulosematerial gemahlenes Altpapier mit einem Anteil zwischen 45 und 55 Gew.% ist.

3. Beschichtungsmaterial nach Anspruch 1 oder 2, dadurch gekennzeichnet, daß das elastomere Bindemittel ein Acryl-Latex mit einem Anteil zwischen 15 und 30 Gew.% ist.

4. Beschichtungsmaterial nach einem der Ansprüche 1 bis 3, dadurch gekennzeichnet, daß
| | |
|---|---|
| Zellulosematerial mit einem Anteil | 48 - 52 Gew.% |
| Borax und Sassolin | 8 - 12 Gew.% |
| Graphit | 5 - 15 Gew.% |
| Bindemittel | 20 - 25 Gew.% |
| Borsilicat | 1 - 5 Gew.% |
| und | |
| Pigmente | 5 - 10 Gew.% |
enthalten sind.

5. Beschichtungsmaterial nach einem der Ansprüche 1 bis 4, dadurch gekennzeichnet, daß zusätzlich 5 - 10 Gew.% Keramikpulver enthalten sind.

6. Beschichtungsmaterial nach einem der Ansprüche 1 bis 5, dadurch gekennzeichnet, daß es zur Verarbeitung in einem Lösungsmittel, dessen Anteil zwischen 5 und 15 Gew.% liegt, gelöst ist.

7. Beschichtungsmaterial nach Anspruch 6, dadurch gekennzeichnet, daß das Lösungsmittel Wasser ist.

8. Beschichtungsmaterial nach einem der Ansprüche 1 bis 7, dadurch gekennzeichnet, daß die Zellulose eine Körnung zwischen 0,01 und 0,03 mm aufweist.

9. Beschichtungsmaterial nach einem der Ansprüche 1 bis 8, dadurch gekennzeichnet, daß das Borsilicat kugelförmig ist und einen Durchmesser zwischen 0,01 und 0,02 mm aufweist.

10. Beschichtungsmaterial nach einem der Ansprüche 1 bis 9, dadurch gekennzeichnet, daß die Mischung eine Wärmeübertragung von mindestens 900 °C/min pro 1 cm Schichtdicke einer aufgetragenen Schicht sichernd, eingestellt ist.

11. Verfahren zur Herstellung des wärmedämmenden Beschichtungsmaterials, bei dem
a) vorzerkleinerte Zellulose in eine Graphit enthaltende Suspension gegeben, vermischt und die Mischung getrocknet wird,
b) die trockene Mischung weiter gemahlen wird, bis die Zellulose eine Körnung von 0,01 bis 0,03 mm aufweist,
c) im Anschluß daran werden Borax und Sassolin in kristalliner Form zugeführt,
d) einer aus dem Bindemittel und dem Lösungsmittel gebildeten Emulsion wird Borsilicat zugegeben und vermischt und
e) dieser Mischung wird die mit den Verfahrensschritten a) bis c) erhaltene Mischung zugegeben und weiter gemischt.

12. Verfahren nach Anspruch 11, dadurch gekennzeichnet, daß vorzerkleinertes Altpapier in einer Körnung zwischen 3 bis 4 mm in eine Graphit enthaltende Emulsion, 45 - 55 Gew.% an der Gesamtmasse des Beschichtungsmaterials ausmachend, gegeben wird und der Anteil an Graphit mindestens 5 Gew.% beträgt.

13. Verfahren nach Anspruch 11 oder 12, dadurch gekennzeichnet, daß im Verfahrensschritt c) 5 -10 Gew.% Keramikpulver zugegeben werden.

14. Verfahren nach einem der Ansprüche 11 bis 13, dadurch gekennzeichnet, daß nach Zugabe von Borax unter gleichzeitiger Zugabe von Borwasser und weiterer Mischung der einzelnen Komponenten, bei einer Temperatur im Bereich zwischen 100 und 150 °C, der Wasseranteil verdampft wird, bis ein trockenes Pulvergemisch gebildet wird.

15. Verwendung des Beschichtungsmaterials nach einem der Ansprüche 1 bis 10, zur Applikation auf metallische tragende Elemente von Gebäuden.

16. Verwendung des Beschichtungsmaterials nach einem der Ansprüche 1 bis 10, dadurch gekennzeichnet, daß die Applikation mit einem Airless-Sprühgerät erfolgt.

17. Verwendung des Beschichtungsmaterials nach einem der Ansprüche 1 bis 10, dadurch gekennzeichnet, daß die Applikation durch Zugabe eines Treibmittels durch Aufschäumen erfolgt.

18. Verwendung des Beschichtungsmaterials nach einem der Ansprüche 15 bis 17, dadurch gekennzeichnet, daß das Beschichtungsmaterial in einer Stärke von bis zu 7 cm appliziert wird.

## Claims

1. Heat-insulating coating material for load-bearing elements, comprising:
| | |
|---|---|
| cellulose | at least 40% by weight |
| borax and sassoline not more | than 25% by weight |
| graphite | at least 5% by weight |
| elastomeric binder | at least 15% by weight |
and borosilicate.

2. Coating material according to Claim 1, characterized in that the cellulose material is ground recycled paper with a proportion of between 45 and 55% by weight.

3. Coating material according to Claim 1 or 2, characterized in that the elastomeric binder is an acrylic latex with a proportion of between 15 and 30% by weight.

4. Coating material according to one of Claims 1 to 3, characterized in that
| | |
|---|---|
| cellulose material with a proportion | 48-52% by weight |
| borax and sassoline | 8-12% by weight |
| graphite | 5-15% by weight |
| binder | 20-25% by weight |
| borosilicate | 1- 5% by weight |
| and | |
| pigments | 5-10% by weight |
are present.

5. Coating material according to one of Claims 1 to 4, characterized in that 5-10% by weight of ceramic powders are additionally present.

6. Coating material according to one of Claims 1 to 5, characterized in that for processing it is in solution in a solvent whose proportion is between 5 and 15% by weight.

7. Coating material according to Claim 6, characterized in that the solvent is water.

8. Coating material according to one of Claims 1 to 7, characterized in that the cellulose has a particle size of between 0.01 and 0.03 mm.

9. Coating material according to one of Claims 1 to 8, characterized in that the borosilicate is in spherical form and has a diameter of between 0.01 and 0.02 mm.

10. Coating material according to one of Claims 1 to 9, characterized in that the mixture is formulated to safeguard a heat transfer of at least 900°C/min per 1 cm thickness of an applied coat.

11. Process for preparing the heat-insulating coating material, in which
a) precomminuted cellulose is placed in a graphite-containing suspension, the components are mixed and the mixture is dried,
b) the dry mixture is ground further until the cellulose has a particle size of from 0.01 to 0.03 mm,
c) subsequently, borax and sassoline are introduced in crystalline form,
d) borosilicate is added to an emulsion formed from the binder and the solvent, and the components are mixed, and
e) the mixture obtained by steps a) to c) of the process is added to the mixture obtained in d), and mixing is continued.

12. Process according to Claim 11, characterized in that precomminuted recycled paper in a particle size of from 3 to 4 mm is placed in a graphite-containing emulsion, making up 45-55% by weight of the total mass of the coating material, and the proportion of graphite is at least 5% by weight.

13. Process according to Claim 11 or 12, characterized in that in step c) of the process 5-10% by weight of ceramic powders are added.

14. Process according to one of Claims 11 to 13, characterized in that following the addition of borax the water fraction is evaporated with simultaneous addition of boric acid solution and further mixing of the individual components, at a temperature in the range between 100 and 150°C, until a dry powder mixture is formed.

15. Use of the coating material according to one of Claims 1 to 10 for application to metallic load-bearing elements of buildings.

16. Use of the coating material according to one of Claims 1 to 10, characterized in that application is made using an airless spraying apparatus.

17. Use of the coating material according to one of Claims 1 to 10, characterized in that application is made by foaming, by adding a blowing agent.

18. Use of the coating material according to one of Claims 15 to 17, characterized in that the coating material is applied in a thickness of up to 7 cm.

## Revendications

1. Matériau d'enduction thermoisolant pour élément porteur, comprenant :
| | |
|---|---|
| de la cellulose | min. 40% en poids |
| du borax et de la sassoline | max. 25% en poids |
| du graphite | min. 5% en poids |
| un agent de liaison élastomère | min. 15% en poids |
et du silicate de bore.

2. Matériau d'enduction suivant la revendication 1, caractérisé en ce que le matériau cellulose est du papier de récupération broyé dans une proportion située entre 45 et 55% en poids.

3. Matériau d'enduction suivant la revendication 1 ou 2, caractérisé en ce que l'agent de liaison élastomère est un latex acrylique dans une proportion située entre 15 et 30% en poids.

4. Matériau d'enduction suivant l'une des revendications 1 à 3, caractérisé en ce qu'il contient :
| | |
|---|---|
| du matériau cellulose dans une proportion de | 48 - 52% en poids |
| du borax et de la sassoline | 8 - 12% en poids |
| du graphite | 5 - 15% en poids |
| un agent de liaison | 20 - 25% en poids |
| du silicate de bore | 1 - 5% en poids |
| et des pigments | 5 - 10% en poids |

5. Matériau d'enduction suivant l'une des revendications 1 à 4, caractérisé en ce qu'il contient en plus 5 - 10% en poids de poudre céramique.

6. Matériau d'enduction suivant l'une des revendications 1 à 5, caractérisé en ce que, pour l'utilisation, il est dissous dans un agent solvant dont la proportion en poids se situe entre 5 et 15%.

7. Matériau d'enduction suivant la revendication 6, caractérisé en ce que l'agent solvant est de l'eau.

8. Matériau d'enduction suivant l'une des revendications 1 à 7, caractérisé en ce que la cellulose présente une granulation comprise entre 0,01 et 0,03 mm.

9. Matériau d'enduction suivant l'une des revendications 1 à 8, caractérisé en ce que le silicate de bore est sous forme sphérique et présente un diamètre compris entre 0,01 et 0,02 mm.

10. Matériau d'enduction suivant l'une des revendications 1 à 9, caractérisé en ce que le mélange est réglé pour assurer un transfert de chaleur d'au moins 900°C/min pour 1 cm d'épaisseur de la couche déposée.

11. Procédé de fabrication de matériau d'enduction thermoisolant pour lequel :
a) de la cellulose préalablement réduite en petits morceaux est ajoutée à une suspension contenant du graphite, lui est mélangée, et le mélange est séché,
b) le mélange sec continue à être broyé jusqu'à ce que la cellulose présente une granulation comprise entre 0,01 et 0,03 mm,
c) à la suite de cela le borax et la sassoline sont ajoutés sous forme cristalline,
d) du silicate de bore est ajouté à l'émulsion formée à partir de l'agent de liaison et de l'agent solvant, et mélangé
e) à ce mélange est ajouté le mélange obtenu aux étapes a) à c) du procédé et il continue à être mélangé.

12. Procédé suivant la revendication 1, caractérisé en ce que le papier de récupération préalablement réduit en petits morceaux et d'une granulation comprise entre 3 et 4 mm est ajouté à une émulsion contenant du graphite, correspondant à 45 - 55% en poids de la masse totale de matériau d'enduction, et que la proportion en graphite correspond au moins à 5% en poids.

13. Procédé suivant la revendication 11 ou 12, caractérisé en ce que dans l'étape c) du procédé 5 - 10% en poids de poudre céramique est ajoutée.

14. Procédé suivant l'une des revendications 11 à 13, caractérisé en ce que, après l'addition de borax simultanément à l'addition d'eau borée et en poursuivant le mélange des composants individuels, à une température située dans une plage allant entre 100 et 150°C, la partie d'eau est évaporée jusqu'à la formation d'un mélange de poudre sec.

15. Utilisation du matériau d'enduction suivant l'une des revendications 1 à 10 pour l'application sur des éléments porteurs métalliques de construction.

16. Utilisation du matériau d'enduction suivant l'une des revendications 1 à 10, caractérisée en ce que l'application est réalisée à l'aide d'un pulvérisateur Airless.

17. Utilisation du matériau d'enduction suivant l'une des revendications 1 à 10, caractérisée en ce que l'application est réalisée par moussage, grâce à l'addition d'un agent propulseur.

18. Utilisation du matériau d'enduction suivant l'une des revendications 15 à 17, caractérisée en ce que le matériau d'enduction est appliqué avec une épaisseur allant jusqu'à 7 mm.
